# FASCICULE DE BREVET EUROPEEN

(11) **EP 1 310 640 B1**
(45) Date de publication et mention de la délivrance du brevet: **28.07.2004**
(21) Numéro de dépôt: 02292515.0
(22) Date de dépôt: 11.10.2002
(51) Int. Cl.: F01N 3/20, F01N 3/023, F01N 3/025, F02D 41/02, F01N 3/035

(54) **Système d'aide à la régénération d'un filtre à particules catalysé**
System für die Unterstützung der Regeneration eines katalytischen Partikelfilters
System for assisting the regeneration of a catalytic particle filter

(30) Priorité: 13.11.2001 FR 0114672
(43) Date de publication de la demande: 14.05.2003
(73) Titulaire: Peugeot Citroen Automobiles SA, 92200 Neuilly sur Seine (FR)
(72) Inventeur: Colignon, Christophe, 92300 Levallois Perret (FR)
(74) Mandataire: Habasque, Etienne Joel Jean-François

(56) Documents cités:
- FR-A- 2 774 427
- US-A- 5 193 340
- PATENT ABSTRACTS OF JAPAN vol. 1997, no. 04, 30 avril 1997 (1997-04-30) & JP 08 319820 A (HINO MOTORS LTD), 3 décembre 1996 (1996-12-03)
- PATENT ABSTRACTS OF JAPAN vol. 010, no. 299 (M-524), 11 octobre 1986 (1986-10-11) & JP 61 112716 A (MITSUBISHI MOTORS CORP), 30 mai 1986 (1986-05-30)

## Description

La présente invention concerne un système d'aide à la régénération d'un filtre à particules catalysé disposé dans une ligne d'échappement de moteur Diesel de véhicule automobile.

On sait que de façon générale, des filtres de ce type peuvent être disposés dans une ligne d'échappement en aval d'un catalyseur d'oxydation en sortie du moteur.

Pour assurer la régénération d'un filtre à particules catalysé, il est en effet nécessaire de maintenir un niveau thermique minimum des gaz d'échappement en entrée de celui-ci, afin de déclencher la combustion des particules piégées dans celui-ci.

Ceci est par exemple mis en oeuvre grâce à des post-injections de carburant dans les cylindres du moteur.

Le rôle de ces post-injections est d'engendrer un haut niveau thermique des gaz en sortie du moteur tout en assurant la production d'hydrocarbures imbrûlés qui sont oxydés dans le catalyseur.

Cette oxydation catalytique des hydrocarbures, se traduit par un accroissement du niveau thermique des gaz d'échappement en entrée du filtre, placé en aval du catalyseur.

La quantité d'hydrocarbures imbrûlés qui traverse alors le filtre à particules catalysé, est faible et son oxydation par l'imprégnation du filtre catalysé ne génère pas d'exotherme.

Un exemple d'un tel état de l'art est par exemple décrit dans la demande de brevet Japonaise JP 61 112 716A.

Le but de l'invention est de proposer un système permettant d'accélérer la régénération du filtre.

A cet effet, l'invention a pour objet un système d'aide à la régénération d'un filtre à particules catalysé disposé dans une ligne d'échappement de moteur Diesel de véhicule automobile, ce filtre étant placé en aval d'un catalyseur d'oxydation en sortie du moteur, caractérisé en ce qu'il comporte un circuit de dérivation de gaz en parallèle aux bornes du catalyseur et équipé de moyens de contrôle de la circulation des gaz dans celui-ci et dans le catalyseur, pour, lors du déclenchement de la régénération du filtre à particules, dériver une partie des gaz chargés en hydrocarbures imbrûlés dans le filtre à particules sans passer par le catalyseur, afin d'accélérer la régénération du filtre à particules.

Selon une autre caractéristique, le catalyseur et le filtre à particules sont disposés dans deux enveloppes distinctes de la ligne d'échappement.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure générale et le fonctionnement d'un système d'aide selon l'invention ;
- la Fig.2 représente une variante de réalisation de ce système ; et
- la Fig.3 représente des moyens de commande entrant dans la constitution d'un tel système.

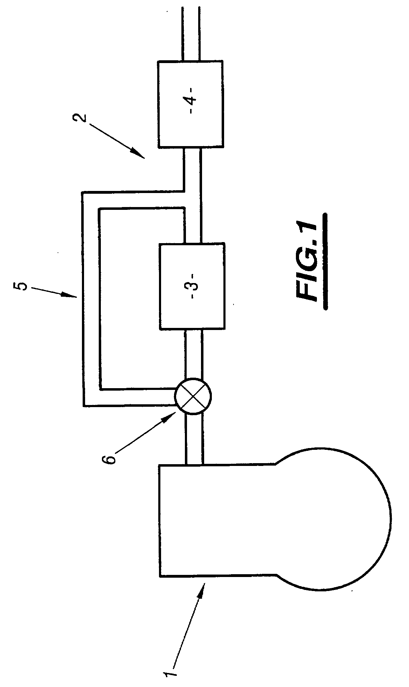

On a en effet représenté sur la figure 1, un moteur Diesel de véhicule automobile qui est désigné par la référence générale 1 et dont la sortie est associée à une ligne d'échappement désignée par la référence générale 2 sur cette figure.

Cette ligne d'échappement comporte un catalyseur d'oxydation désigné par la référence générale 3 et un filtre à particules catalysé désigné par la référence générale 4, avantageusement disposés dans deux enveloppes distinctes de la ligne d'échappement 2.

Le filtre à particules est disposé en aval du catalyseur.

Comme cela a été indiqué précédemment, lors d'une phase de régénération du filtre à particules 4, le moteur et plus particulièrement son système d'alimentation en carburant, est piloté pour assurer des post-injections de carburant dans les cylindres de celui-ci, afin d'assurer non seulement un haut niveau thermique des gaz d'échappement en sortie de celui-ci, mais également la production d'hydrocarbures imbrûlés dans ceux-ci, ces hydrocarbures étant destinés à être oxydés dans le catalyseur 3.

De ce fait, cette oxydation catalytique des hydrocarbures se traduit par une augmentation du niveau thermique des gaz en entrée du filtre à particules, placé en aval du catalyseur 3.

Selon l'invention, le système comporte également un circuit de dérivation de gaz désigné par la référence générale 5 sur cette figure, en parallèle aux bornes du catalyseur 3 et équipé de moyens 6 de contrôle de la circulation des gaz dans ce catalyseur et dans ce circuit de dérivation, pour, lors du déclenchement de la régénération du filtre, dériver une partie des gaz d'échappement chargés en hydrocarbures, dans le filtre à particules sans passer par le catalyseur, afin d'activer la régénération de ce filtre à particules catalysé.

Le fonctionnement de ces moyens de contrôle est par exemple piloté par un calculateur approprié.

On conçoit alors qu'une partie des hydrocarbures produits lors des post-injections de carburant dans les cylindres du moteur est dérivée directement en entrée du filtre à particules, et n'est pas oxydée par le catalyseur placé en amont de ce filtre.

Ces hydrocarbures entrent alors directement dans le filtre à particules où ils sont convertis en quasi-totalité, ce qui limite la quantité de polluants rejetés dans l'environnement, mais surtout permet d'augmenter la vitesse de combustion des particules piégées dans celui-ci. Des essais en laboratoire ont ainsi montré que l'on pouvait multiplier par deux, la vitesse de régénération.

L'autre partie des hydrocarbures, c'est-à-dire celle passant dans le catalyseur, est oxydée dans celui-ci, créant ainsi un exotherme permettant également d'augmenter le niveau thermique des gaz d'échappement entrant dans le filtre à particules.

Il va de soi bien entendu qu'un tel système peut être utilisé en association avec un moteur dans lequel on utilise des post-injections de carburant dans les cylindres du moteur pour produire des hydrocarbures ou dans lequel ces hydrocarbures sont obtenus par post-injection de carburant directement dans la ligne d'échappement.

Un tel système peut s'appliquer à tout moteur Diesel de véhicule automobile, de type de tourisme, utilitaire léger ou poids lourd.

Sur la figure 1, les moyens 6 de contrôle de la circulation des gaz dans le catalyseur et dans le circuit de dérivation, sont formés par un organe unique disposé à l'intersection de conduits de raccordement correspondants.

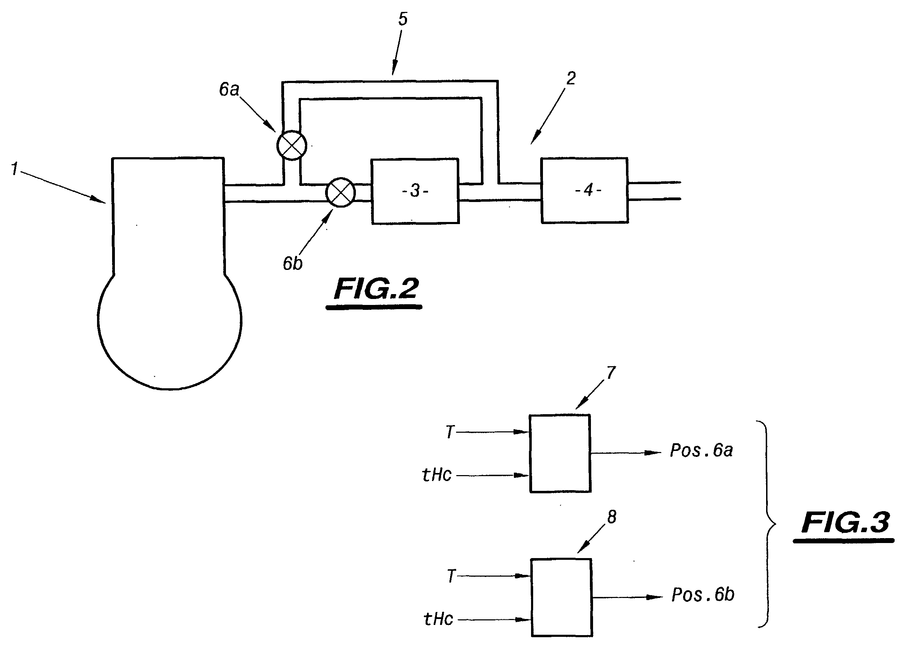

Il va de soi bien entendu que d'autres modes de réalisation peuvent être envisagés, comme celui représenté sur la figure 2, dans lequel l'organe unique 6 formant les moyens de contrôle de la figure 1, est remplacé par deux papillons disposés chacun dans l'un des conduits correspondants et désignés par les références 6a et 6b respectivement.

Ces papillons peuvent par exemple être des papillons à commande proportionnelle, permettant de faire varier en continu la quantité de gaz dévié, de 0 à 100%. La position de ces papillons peut alors être commandée de différentes façons par des moyens de commande.

En effet, un calculateur de pilotage de la position de ceux-ci peut être adapté pour prendre en compte des informations délivrées par exemple par un capteur de température des gaz en amont de ces moyens de contrôle, un capteur de teneur en Hc en amont de ceux-ci, des cartographies de positions prédéterminées de ces papillons ou enfin des moyens de simulation.

Un exemple de réalisation de tels moyens de commande est illustré sur la figure 3 où l'on reconnaît des moyens de commande 7 et 8 de la position (pos.6a et pos.6b) des papillons 6a et 6b respectivement, recevant en entrée des informations de température T et de teneur en Hc, tHc.

A titre d'exemple, on a pu constater que lorsque 100% des gaz passent dans le catalyseur, 12 grammes de particules pouvaient être régénérées en 40 mn dans le filtre, tandis que lorsque 100% des gaz étaient dérivés, 22 grammes de particules ont pu être brûlées en 40 mn.

Dans les deux cas, la température en amont des moyens de contrôle était de 410°C.

## Revendications

1. Système d'aide à la régénération d'un filtre à particules catalysé disposé dans une ligne d'échappement de moteur Diesel de véhicule automobile, ce filtre (4) étant placé en aval d'un catalyseur d'oxydation (3) en sortie du moteur (1), et commportant un circuit de dérivation de gaz (5) en parallèle aux bornes du catalyseur (3) **caractérisé en ce que** le circuit de dérivation de gaz (5) est équipé de moyens (6) de contrôle de la circulation des gaz dans celui-ci et dans le catalyseur, pour, lors du déclenchement de la régénération du filtre à particules (4), dériver une partie des gaz chargés en hydrocarbures imbrûlés dans le filtre à particules (4) sans passer par le catalyseur (3), afin d'accélérer la régénération du filtre à particules.

2. Système selon la revendication 1, **caractérisé en ce que** le catalyseur (3) et le filtre à particules (4) sont disposés dans deux enveloppes distinctes de la ligne d'échappement (2).

3. Système selon la revendication 1 ou 2, **caractérisé en ce que** les hydrocarbures imbrûlés sont obtenus par des post-injections de carburant dans les cylindres du moteur (1).

4. Système selon la revendication 1 ou 2, **caractérisé en ce que** les hydrocarbures imbrûlés sont obtenus par des post-injections de carburant dans la ligne d'échappement (2).

5. Système selon l'une quelconque des revendications précédentes, **caractérisé en ce que** la position des moyens (6) de contrôle de la circulation des gaz est déterminée à partir d'informations délivrées par des capteurs de température et de teneur en Hc de gaz en amont de ceux-ci.

6. Système selon l'une quelconque des revendications 1 à 4, **caractérisé en ce que** la position des moyens de contrôle de la circulation des gaz est déterminée à partir de cartographies de positions prédéterminées.

7. Système selon l'une quelconque des revendications 1 à 4, **caractérisé en ce que** la position des moyens (6) de contrôle de la circulation des gaz est déterminée à partir de moyens de simulation.

8. Système selon l'une quelconque des revendications précédentes, **caractérisé en ce que** les moyens (6) de contrôle sont associés à un calculateur de pilotage de la position de ceux-ci.

9. Système selon l'une quelconque des revendications précédentes, **caractérisé en ce que** les moyens (6) de contrôle comprennent au moins un organe de contrôle à commande proportionnelle.

## Patentansprüche

1. System zum Unterstützen der Regeneration eines in einer Kraftfahrzeug-Dieselmotor-Auspuff-Linie angeordneten katalytischen Partikel-Filters, wobei dieser Filter (4) in Flussrichtung hinter einem Oxidations-Katalysator (3) am Ausgang des Motors (1) angeordnet ist, und wobei es einen Gas-Abzweig-Kreis (5) parallel zu den Anschlüssen des Katalysators (3) aufweist, **dadurch gekennzeichnet, dass** der Gas-Abzweig-Kreis (5) mit Vorrichtungen (6) zum Steuern der Zirkulation von Gasen in diesem und in dem Katalysator ausgestattet ist, um bei Auslösen der Regeneration des Partikel-Filters (4) einen Teil der mit unverbrannten Kohlenwasserstoffen beladenen Gase in den Partikel-Filter (4) abzuleiten, ohne dass sie den Katalysator (3) durchlaufen, um die Regeneration des Partikel-Filters zu beschleunigen.

2. System gemäß Anspruch 1, **dadurch gekennzeichnet, dass** der Katalysator (3) und der Partikel-Filter (4) in zwei getrennten Gehäusen der Auspuff-Linie (2) angeordnet sind.

3. System gemäß Anspruch 1 oder 2, **dadurch gekennzeichnet, dass** die unverbrannten Kohlenwasserstoffe durch nachträgliche Einspritzungen von Brennstoff in die Zylinder des Motors (1) erhalten werden.

4. System gemäß Anspruch 1 oder 2, **dadurch gekennzeichnet, dass** die unverbrannten Kohlenwasserstoffe durch nachträgliche Einspritzungen von Brennstoff in die Auspuff-Linie (2) erhalten werden.

5. System gemäß einem der vorhergehenden Ansprüche, **dadurch gekennzeichnet, dass** die Stellung der Vorrichtungen (6) zum Steuern der Zirkulation der Gase anhand von Informationen bestimmt werden, welche von in Flussrichtung vor diesen angeordneten Temperatur-Aufnehmern und Gas-Hc-Gehalt-Aufnehmern geliefert werden.

6. System gemäß einem der Ansprüche 1 bis 4, **dadurch gekennzeichnet, dass** die Stellung der Vorrichtungen (6) zum Steuern der Zirkulation der Gase anhand von Kartographien von vorbestimmten Stellungen bestimmt werden.

7. System gemäß einem der Ansprüche 1 bis 4, **dadurch gekennzeichnet, dass** die Stellung der Vorrichtungen (6) zum Steuern der Zirkulation der Gase anhand von Simulations-Vorrichtungen bestimmt werden.

8. System gemäß einem der vorhergehenden Ansprüche, **dadurch gekennzeichnet, dass** die Vorrichtungen (6) zum Steuern mit einem Rechner zum Steuern ihrer Stellung verbunden sind.

9. System gemäß einem der vorhergehenden Ansprüche, **dadurch gekennzeichnet, dass** die Vorrichtungen (6) zum Steuern wenigstens ein Steuer-Organ zum Proportional-Steuern aufweisen.

## Claims

1. System for assisting in the regeneration of a catalysed particulate filter disposed in an exhaust line of an automotive vehicle diesel engine, this filter (4) being positioned downstream of an oxidation catalyser (3) on the output side of the engine and including a gas bypass circuit (5) parallel to the terminals of the catalyser (3) **characterised in that** the gas bypass circuit (5) is equipped with means (6) of controlling the gas circulation in the latter and in the catalyser in order, when the regeneration of the particulate filler (4) is triggered, to divert a proportion of the gases laden with unburned hydrocarbons into the particulate filter (4) without passing through the catalyser (3) so as to speed up the regeneration of the particulate filter.

2. System according to claim 1, **characterised in that** the catalyser (3) and the particulate filter (4) are disposed in two separate casings of the exhaust line (2).

3. System according to claim 1 or 2, **characterised in that** the unburned hydrocarbons are obtained by post-injecting fuel into the cylinders of the engine (1).

4. System according to claim 1 or 2, **characterised in that** the unburned hydrocarbons are obtained by post-injecting fuel into the exhaust line (2).

5. System according to any one of the preceding claims, **characterised in that** the position of the means (6) of controlling the gas circulation is determined from data supplied by sensors for detecting the temperature and Hc content of gases upstream thereof.

6. System according to any one of claims 1 to 4, **characterised in that** the position of the means (6) of controlling the gas circulation is determined from maps of predetermined positions.

7. System, according to any one of claims 1 to 4, **characterised in that** the position of the means (6) of controlling the gas circulation is determined from simulators.

8. System according to any one of the preceding claims, **characterised in that** the controlling means (6) are associated with a computer for controlling the position of said means.

9. System according to any one of the preceding claims, **characterised in that** the controlling means (6) comprise at least one proportional control unit.
